# EUROPEAN PATENT APPLICATION

(11) **EP 1 208 744 A2**
(43) Date of publication of application: **29.05.2002**
(21) Application number: 01126131.0
(22) Date of filing: 02.11.2001
(51) Int. Cl.: A01J 5/04

(54) **Milking unit with short milk tubes provided with internal longitudinal baffles**

(30) Priority: 28.11.2000 IT MI000670 U
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico (Reggio Emilia) (IT)
(74) Representative: Giambrocono, Alfonso, Dr. Ing.

(57) **Abstract**

The milking unit comprises: a manifold for the milk; four sheath holders (30) complete with relative sheaths connected to the manifold by corresponding short milk hoses, the space between a sheath and the relative sheath holder forming a pulsation chamber; four short pulsation tubes; a cross pulsation distributor (10) formed from the combination of two T-shaped connector elements, one branch (20, 22) of each T-shaped connector element being connected to one of the two channels of a pulsator, the other two branches (12, 14, 16, 18) of the T-shaped element forming part of two respective short pulsation tubes together with a respective short pulsation hose and a pulsation connector (30) on the relative sheath holder (38) connected to the corresponding pulsation. Each short pulsation tube (12, 14, 16, 18, 36) presents, at least along part of its length, longitudinal baffles (24; 26, 28, 30; 32, 34) which divide its internal cross-section into substantially equal parts.

## Description

The present invention relates to the milking units of a milking plant.

A milking unit for cattle is known to comprise:
- a manifold for the milk;
- four sheath holders complete with sheaths connected to the manifold by corresponding short milk hoses, the space between a sheath and the relative sheath holder forming a pulsation chamber;
- four short pulsation tubes.

The manifold comprises:
- a lower cup of suitable transparent plastic material, complete with closure valve and a connector for milk exit from the manifold;
- a cover of stainless steel or suitable plastic material, applicable sealedly to said cup and provided with four external connectors for entry of the milk originating from the relative short milk tube;
- a pulsation distributor known as a "pulsation cross" because of its shape and formed of suitable plastic material, this cross being removably fixed to the top of the manifold cover and consisting essentially of the combination of two T-shaped connector elements forming one piece, one branch of each T-shaped element being connected to one of the two channels of the pulsator, the other two branches of the T-shaped element forming part of two respective short pulsation tubes together with a respective short hose (the so-called short pulsation hose) and a pulsation connector on the relative sheath holder connected to the corresponding pulsation chamber.

For clarity, it should be noted that a short pulsation tube is the combination of: one of the branches of one of the two T-shaped connectors of the cross distributor which is connected to the relative pulsation chamber by a respective short pulsation hose; this short pulsation hose; and the pulsation connector of the relative sheath holder, which connects the corresponding pulsation chamber to the relative short pulsation hose.

The manifold performs the following functions overall:
- it collects the drawn milk originating from the four sheaths via the short milk hoses and entering the manifold through the aforesaid milk entry connectors forming part of the cover, the collected milk then leaving the manifold through the discharge connector forming part of the cup, so that it can be conveyed to the milk main via the so-called long milk tube;
- it distributes a pulsation signal, generated by the pulsator, between the two pairs of pulsation chambers, this distribution taking place via the cross pulsation distributor.

In detail, the pulsation cross separately connects one of the two pulsation channels of the pulsator to one of the two pairs of pulsation chambers so that each individual channel of the pulsator operates the respective pair of sheaths.

To "operate" a pair of sheaths means to transmit a pulsation cycle to the relative pulsation chambers. More precisely, atmospheric pressure and vacuum alternate within the pulsation chambers relative to each pair of sheath holders or, more correctly, there is a pressure value which, starting from atmospheric pressure, varies cyclically with time between this pressure value and a minimum value with a typical variation pattern well known to the expert of the art.

It is also well known to the expert of the art that in all milking plants, even the most modem, if the relative graphs are plotted (with time along the horizontal axis and pressure along the vertical axis) the pressure variation within the pulsation chambers is not regular, but presents irregular variations or disturbances. These irregularities denote a non-uniformity of the degree of vacuum present within the pulsation cambers, this causing an irregular movement of the relative sheath, which is transmitted to the teat of the animal, causing disturbance thereto with possible reduction in productivity and deterioration of the organic surface tissues of the teat.

Since the very inception of milking plants, this problem has never been overcome.

The object of the present invention is to at least significantly reduce, if not to overcome, the aforesaid irregularities.

This object is attained by the milking unit of the present invention, characterised in that each short pulsation tube presents, at least along part of its length, longitudinal baffles which divide its internal cross-section into substantially equal parts.

In this respect, it has been found that the presence of said longitudinal baffles enables the aforesaid irregularities in the vacuum variation within the interior of the pulsation chambers to be significantly reduced, if not totally eliminated.

As, as stated, the said short pulsation tube comprises the short pulsation hose and as it has been found that good results are obtained (significant reduction in said irregularities) even by providing said longitudinal baffles only along the relative connection branch of the pulsation cross and/or along the corresponding pulsation connector of the relative sheath holder, said longitudinal baffles are conveniently not provided along the short pulsation hoses, to avoid those problems relative to the construction of a hose containing longitudinal baffles.

The maximum number of parts into which, for constructional reasons, the cross-section of a short pulsation tube can be divided does not normally exceed four or five parts, but it has been found that this number is more than sufficient to obtain a significant reduction in said pressure irregularities.

The invention will be more apparent from the ensuing description of some embodiments thereof given by way of example.

In this description reference is made to the accompanying drawings, in which:
Figure 1 is a top plan view of the cross pulsation distributor of a milking unit;
Figure 2 is a side elevation of a sheath holder with the relative sheath inserted;
Figure 3 is a view of the outer mouth both of one of the four connection branches of the pulsation cross to which one end of the relative short pulsation hose is connected, and of the outer mouth of the pulsation connector of a sheath holder, to this connector there being connected the other end of the relative short pulsation hose;
Figure 4 is a variant thereof;
Figure 5 is a further variant thereof.

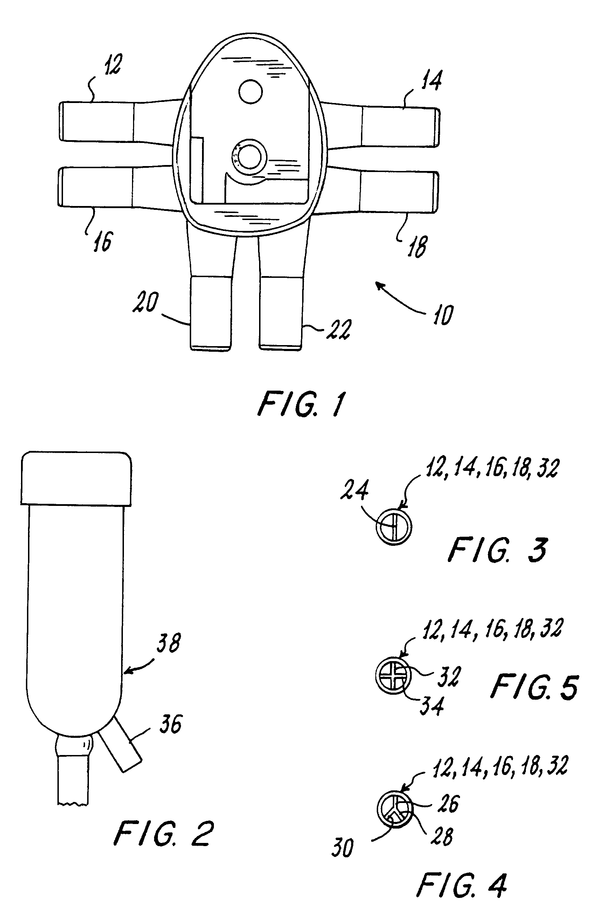

As already stated, a significant reduction in pressure variation irregularity in the pulsation chambers is achieved even if said longitudinal baffles are not provided along the entire short pulsation tube but merely along said four connection branches 12, 14, 16, 18 of the cross pulsation distributor 10 and/or only along the pulsation connector 36 of each sheath holder 38. As can be seen from Figure 1, the connection branches 12, 14 and the relative connection branch 20 to be connected to one of the two channels of the pulsator (not shown) together form a first T-shaped connector element, and the connection branches 16, 18 and the relative connection branch 22 to be connected to the other channel of the pulsator together form a second T-shaped connector element. The combination of the two T-shaped connector elements forms the pulsation cross 10 constructed in one piece from suitable plastic material.

As can be seen from Figures 3, 4 and 5, the connection branches 12 and 14, 16 and 18 of the cross 10, and also the pulsation connector 36 of the sheath holder 30, internally present longitudinal baffles which divide their cross-section into 2, 3 or 4 parts respectively. In the case of Figure 3 a single diametrical longitudinal baffle 24 is provided; in the case of Figure 4 three baffles 26, 28 and 30 are provided disposed at 120° apart; and in the case of Figure 5 two perpendicular crossing baffles are provided.

Even with the embodiment of Figure 3, an appreciable reduction in pressure variation irregularities in the pulsation chambers is obtained even if the relative longitudinal baffle 24 has a length limited to only the branches 12, 14, 16, 18 of the cross 10 and/or to the pulsation connector 36 of the sheath holder 38. The situation is improved by using the embodiment of Figure 4 and further improved with the embodiment of Figure 5.

As already stated, maximum reduction would be obtained by also providing longitudinal baffles along the short pulsation hoses (not shown) which connect a respective connection branch 12, 14, 16, 18 to the corresponding pulsation connector 36 of the sheath holder 38, although such a solution is not easy to achieve in practice. However the reduction in pressure variation irregularities within the pulsation chambers is already so significant by providing longitudinal baffles along said milking branches 12, 14, 16, 18 of the pulsation cross 10, and even more by also providing such longitudinal baffles along the pulsation connectors 36 of the sheath holder 38, that in practice it becomes superfluous to also provide these longitudinal baffles along the short pulsation hoses.

It should also be noted that said longitudinal baffles can be made of such a thickness as not to appreciably influence the duration of the individual milking stages, even if the inner diameter of those portions of the short pulsation tubes in which the longitudinal baffles are provided is not increased.

Moreover the longitudinal baffles help to substantially reinforce said connectors 12, 14, 16, 18, 36.

Finally it should be noted that the reduction in said irregularities obtained by the use of longitudinal baffles, by which the movement of the sheaths surrounding the relative teat of the animal is made more regular, improves the quality of milking, with reduced risk of physiological damage too the animals.

## Claims

1. A milking unit comprising:
- a manifold for the milk; four sheath holders (30) complete with relative sheaths connected to the manifold by corresponding short milk hoses, the space between a sheath and the relative sheath holder forming a pulsation chamber; four short pulsation tubes; a cross pulsation distributor (10) formed from the combination of two T-shaped connector elements, one branch (20, 22) of each T-shaped connector element being connected to one of the two channels of a pulsator, the other two branches (12, 14, 16, 18) of the T-shaped element forming part of two respective short pulsation tubes together with a respective short pulsation hose and a pulsation connector (36) on the relative sheath holder (38) connected to the corresponding pulsation chamber;
**characterised in that** each short pulsation tube presents, at least along part of its length, longitudinal baffles (24; 26, 28, 30; 32, 34) which divide its internal cross-section into substantially equal parts.

2. A milking unit as claimed in claim 1, wherein the longitudinal baffles (24; 26, 28, 30; 32, 34) are provided along each connection branch (12, 14, 16, 18) of the cross distributor (10) connected to one end of the relative short pulsation hose and/or along the pulsation connector (36) of the sheath holder (38) connected to the other end of said short pulsation hose.

3. A milking unit as claimed in claim 1, wherein the number of parts into which the longitudinal baffles (24) divide the respective cross-section of the short pulsation tube is two.

4. A milking unit as claimed in claim 1, wherein the number of parts into which the longitudinal baffles (26, 28, 30) divide the respective cross-section of the short pulsation tube is three.

5. A milking unit as claimed in claim 1, wherein the number of parts into which the longitudinal baffles (32, 34) divide the respective cross-section of the short pulsation tube is four.

6. A milking unit as claimed in claim 4, wherein the longitudinal baffles are three (26, 28, 30) in number, disposed at 120° apart.

7. A milking unit as claimed in claim 5, wherein the longitudinal baffles are two (32, 34) in number, disposed perpendicular to and crossing each other.
